# EUROPEAN PATENT APPLICATION

(11) **EP 4 696 632 A1**
(43) Date of publication of application: **18.02.2026**
(21) Application number: 25194828.7
(22) Date of filing: 08.08.2025
(51) Int. Cl.: B66B 3/00, A61G 5/04, B25J 9/16, B25J 11/00, G05D 107/60

(54) **GUIDE ROBOTS FOR PASSENGER ASSISTANCE**

(30) Priority: 14.08.2024 US 202418805450
(71) Applicant: Otis Elevator Company, Farmington CT 06032-2568 (US)
(72) Inventor: Roberts, Randall, Farmington, 06032 (US); Bhaskar, Kiron, Farmington, 06032 (US); Gamini, N V Rudramurthy, 500081 Hyderabad (IN); Phani Pradeep Miriyala, Srisatya Bramararjuna, 500081 Hyderabad (IN)
(74) Representative: Winter, Brandl - Partnerschaft mbB

(57) **Abstract**

An automatic wayfinding system is provided and includes a robotic guide, a passenger interface through which a passenger provides an input of a desired destination and a dispatching module, which, upon receipt of the input of the desired destination, dispatches the robotic guide to the passenger. At least one of the robotic guide and the dispatching module have access to a navigation map including the desired destination, a current position of the passenger and information relating to one or more paths from the current position of the passenger to the desired destination. The robotic guide is programmed to lead the passenger along the one or more paths while remaining tethered to the passenger.

## Description

### BACKGROUND

The present disclosure relates to personnel movement systems and, in particular, to an elevator system, an escalator system and a moving walkway system with assistance for passengers in the forms of an assistance interface, guide robots and elevator functionality from wayfinding applications.

In an elevator system, in particular, an elevator shaft is built into a building and an elevator car travels up and down along the elevator shaft to arrive at landing doors of different floors of the building. The movement of the elevator is driven by a machine that is controlled by a controller according to instructions received from users of the elevator system. During operational conditions, passengers will typically arrive at an elevator landing in a building, press a call button and wait for the elevator to arrive. Once the elevator arrives and its doors open, the passenger will enter the elevator and select a destination floor. The doors close and the elevator travels upwardly or downwardly to the selected floor whereupon the passenger disembarks.

For passengers with special needs, using elevators, escalator and moving walkways often presents a challenge. Blind or vision-impaired passengers may not be able to see the elevators, the escalators and the moving walkways, their respective landings or their respective buttons. Passengers with mobility problems may not be able to enter and exit an elevator in time for the doors to open or close. Even for passengers who do not have special needs, it may be difficult to locate elevators, escalators and moving walkways in a given building, especially in cases in which only certain elevators, escalators and moving walkways service certain floors or other specified areas.

### SUMMARY

According to an aspect of the disclosure, an automatic wayfinding system is provided and includes a robotic guide, a passenger interface through which a passenger provides an input of a desired destination and a dispatching module, which, upon receipt of the input of the desired destination, dispatches the robotic guide to the passenger. At least one of the robotic guide and the dispatching module have access to a navigation map including the desired destination, a current position of the passenger and information relating to one or more paths from the current position of the passenger to the desired destination. The robotic guide is programmed to lead the passenger along the one or more paths while remaining tethered to the passenger.

**In** accordance with additional or alternative embodiments, the automatic wayfinding system is deployed in a building including a personnel movement system, the navigation map includes information of the personnel movement system and the one or more paths include elevator/escalator/moving walkway entrances and exits and vertical movements along elevator shafts.

In accordance with additional or alternative embodiments, the robotic guide is communicative with elevators, escalators and moving walkways of the personnel movement system.

In accordance with additional or alternative embodiments, the robotic guide is communicative with the passenger and includes storage components.

In accordance with additional or alternative embodiments, the passenger registers for the automatic wayfinding system through the passenger interface and generates a passenger profile.

In accordance with additional or alternative embodiments, the passenger profile is descriptive of at least a disability of the passenger and the robotic guide is configured in accordance with at least the disability.

In accordance with additional or alternative embodiments, the robotic guide is virtually tethered to the passenger and the robotic guide uses detection technology to detect a position of the passenger while leading the passenger along the one or more paths and is programmed to remain close to the passenger.

In accordance with additional or alternative embodiments, the robotic guide is physically tethered to the passenger by coupling with a wheelchair of the passenger.

In accordance with additional or alternative embodiments, the robotic guide is physically tethered to the passenger and is a standalone wheelchair for the passenger.

According to an aspect of the disclosure, an automatic wayfinding system is provided and includes a plurality of robotic guides, each having a unique configuration, a passenger interface through which a passenger registers for the automatic wayfinding system, generates a passenger profile and provides an input of a desired destination and a dispatching module, which, upon receipt of the input of the desired destination, selects a robotic guide having the unique configuration corresponding to the passenger profile from the plurality of the robotic guides and dispatches the robotic guide to the passenger. At least one of the robotic guide and the dispatching module having access to a navigation map including the desired destination, a current position of the passenger and information relating to one or more paths from the current position of the passenger to the desired destination. The robotic guide is programmed to lead the passenger along the one or more paths while remaining tethered to the passenger.

In accordance with additional or alternative embodiments, the automatic wayfinding system is deployed in a building including a personnel movement system, the navigation map includes information of the personnel movement system and the one or more paths includes elevator/escalator/moving walkway entrances and exits and vertical movements along elevator shafts.

In accordance with additional or alternative embodiments, the robotic guide is communicative with elevators, escalators and moving walkways of the personnel movement system.

In accordance with additional or alternative embodiments, the robotic guide is communicative with the passenger and includes storage components.

In accordance with additional or alternative embodiments, the passenger profile is descriptive of at least a disability of the passenger and the robotic guide is configured in accordance with at least the disability.

In accordance with additional or alternative embodiments, the robotic guide is virtually tethered to the passenger and the robotic guide uses detection technology to detect a position of the passenger while leading the passenger along the one or more paths and is programmed to remain close to the passenger.

In accordance with additional or alternative embodiments, the robotic guide is physically tethered to the passenger by coupling with a wheelchair of the passenger.

In accordance with additional or alternative embodiments, the robotic guide is physically tethered to the passenger and is a standalone wheelchair for the passenger.

According to an aspect of the disclosure, an operational method of an automatic wayfinding system is provided. The operational method includes registering a passenger, receiving, from the passenger, a passenger profile, receiving, from the passenger, an input of a desired destination, selecting, from among a plurality of robotic guides, a robotic guide having a unique configuration corresponding to the passenger profile, dispatching the robotic guide to the passenger and programming the robotic guide to lead the passenger from a current position of the passenger to the desired destination while remaining tethered to the passenger.

In accordance with additional or alternative embodiments, the automatic wayfinding system is deployed in a building including a personnel movement system and the programming includes programming the robotic guide to lead the passenger in entrances and exits with respect to elevators/escalators/moving walkways of the personnel movement system and vertical movements along elevator shafts.

In accordance with additional or alternative embodiments, the passenger profile is descriptive of at least a disability of the passenger and the unique configuration of the robotic guide corresponds to at least the disability.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a perspective view of an elevator system in accordance with embodiments;
FIG. 2A is a schematic diagram illustrating an architecture of an elevator system control application in accordance with embodiments;
FIG. 2B is a flow diagram illustrating how parties interact with the elevator system control application of FIG. 2A in accordance with embodiments;
FIG. 3 is a graphical depiction of an instance of the elevator control application of FIGS. 2A and 2B in accordance with embodiments;
FIG. 4 is a schematic diagram of an elevator control system in accordance with embodiments;
FIG. 5 is a flow diagram illustrating a control system operational method for the elevator control system of FIG. 4 in accordance with embodiments;
FIG. 6 is a schematic diagram of a system in accordance with embodiments;
FIG. 7 is a graphical display of a wayfinding application with a user interface generated therein in accordance with embodiments;
FIG. 8 is a schematic diagram of a computing system for wayfinding and elevator system control in accordance with embodiments;
FIG. 9 is a graphical illustration of an automatic wayfinding system with a robotic guide;
FIG. 10 is a graphical illustration of robotic guide that is virtually tied to a passenger in accordance with embodiments;
FIG. 11 is a graphical illustration of robotic guide that is coupled to a wheelchair of a passenger in accordance with embodiments;
FIG. 12 is a graphical illustration of robotic guide that is provided as a wheelchair of a passenger in accordance with embodiments;
FIG. 13 is a flow diagram illustrating an operational method of an automatic wayfinding system in accordance with embodiments; and
FIG. 14 is a schematic diagram illustrating an interactive system executable on a portable computing device in accordance with embodiments.

### DETAILED DESCRIPTION

There is a continuing need to make the use of elevator systems, escalator systems and moving walkways and, more generally, to make building transportation systems more inclusive and easier to use so that a building can be easier to navigate. This is especially true for passengers with special needs, such as blind or vision-impaired passengers and passengers with mobility problems.

Thus, as will be described below, a personnel movement system is provided in a form of an elevator system, an escalator system and/or a moving walkway system with a two-sided application including a passenger side and a building side. Several users of different types can be included based on their respective roles (i.e., passengers, mechanics, etc.) with each user optionally having a detailed profile for each user type. Based on the passenger data, when a passenger wants to use the personnel movement system, certain modules are activated to assist the passenger (i.e., visual assistance for those with vision challenges vocal assistance for deaf passengers and slowed operations for passengers with difficulties with mobility). Similar profiles can be created by building owners interested in the use of the application platform for improving inclusivity, ease of use and building navigation. Also, an elevator system is provided in which a navigation application, such as a navigation application installed on a smartphone, allows a passenger to solely navigate the personnel movement system without need for a separate personnel movement system application. In addition, an automated wayfinding system is provided that mimics the behavior of a hotel concierge or a porter using robotic technology. The automatic wayfinding system can be called by the above-noted application, particularly where passenger(s) can register their desired destination whereby the system can respond by allocating a robotic guide assistant. Based on the passenger profile and needs, this robotic guide assistant can range from a simple navigating robotic guide, a robotic assist device to couple with a wheelchair, a standalone robotic wheelchair, a luggage carrier, etc. A robotic guidance dispatcher of the system will send the appropriate guidance device to the passenger and will use building layout data to provide a navigation path to their elevator. The robotic assist device will move along this path and will be virtually tethered to the passenger using human detection technologies, such as LiDAR, RADAR, mmWave sensing, optical sensing, etc., to ensure it keeps close to the passenger and move at their pace. The robotic assist device can provide coordinated movement when that is needed by the passenger and can, if needed, accompany them in the elevator. Once at an elevator, the robotic assist device can signal the elevator that they are present and ready to board. The robotic assist device can also be programmed to converse with the passenger with greetings and useful information like what concierges and porters would provide. When needed, the robotic assist device can also provide storage for bags and other belongings for the passenger.

The following description will relate to a case in which a personnel movement system is an elevator system in particular. This is being done for purposes of clarity and brevity and should not be interpreted as limiting the description or the following claims in any way. It is to be further understood that other personnel movement systems can include, but are not limited to, escalator systems and moving walkway systems, all of which would be readily apparent to persons of ordinary skill in the art without any undue experimentation. Thus, any reference in the following description should be interpreted as pertaining to an elevator system, an escalator system, a moving walkway system, another similar type of system and/or a general personnel movement system.

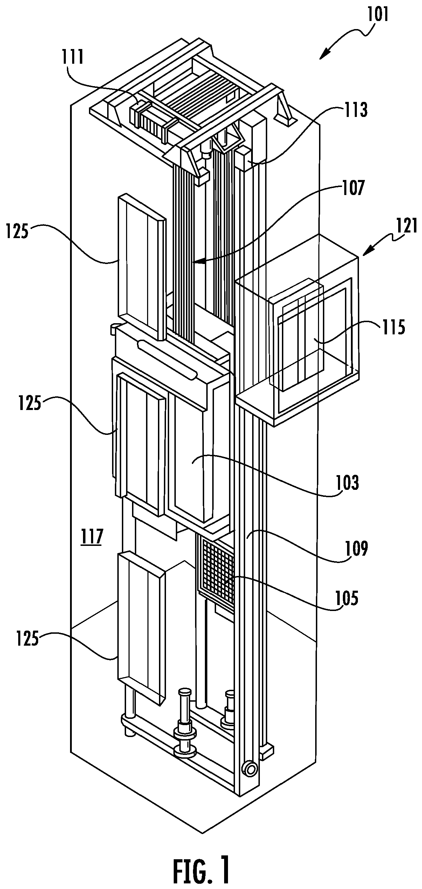

With reference to FIG. 1, which is a perspective view of an elevator system 101, the elevator system 101 includes an elevator car 103, a counterweight 105, a tension member 107, a guide rail 109, a machine 111, a position reference system 113 and a controller 115. The elevator car 103 and the counterweight 105 are connected to each other by the tension member 107. The tension member 107 may include or be configured as, for example, ropes, steel cables and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the elevator shaft or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processorbased machine, such as a personal computer, server, distributed computing network, etc.

The machine 111 may include a motor or similar driving mechanism. In accordance with embodiments of the disclosure, the machine 111 is configured to include an electrically driven motor. The power supply for the motor is a variable speed drive, which may be commonly referred to as a drive. As understood by those skilled in the art, the drive is comprised of several electrical circuits such as an inverter, rectification stage, filtering, and control circuitry towards the purpose of controlling the motor. The machine 111 may include a traction sheave that imparts force to tension member 107 to move the elevator car 103 within elevator shaft 117.

The elevator system 101 also includes one or more elevator doors 104. The elevator door 104 may be integrally attached to the elevator car 103 or the elevator door 104 may be located on a landing 125 of the elevator system 101, or both. Embodiments disclosed herein may be applicable to both an elevator door 104 integrally attached to the elevator car 103 or an elevator door 104 located on a landing 125 of the elevator system 101, or both. The elevator door 104 opens to allow passengers to enter and exit the elevator car 103.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars, escalator components and moving walkways equipped with friction wheels, pinch wheels or traction wheels). FIG. 1 is merely a non-limiting example presented for illustrative and explanatory purposes.

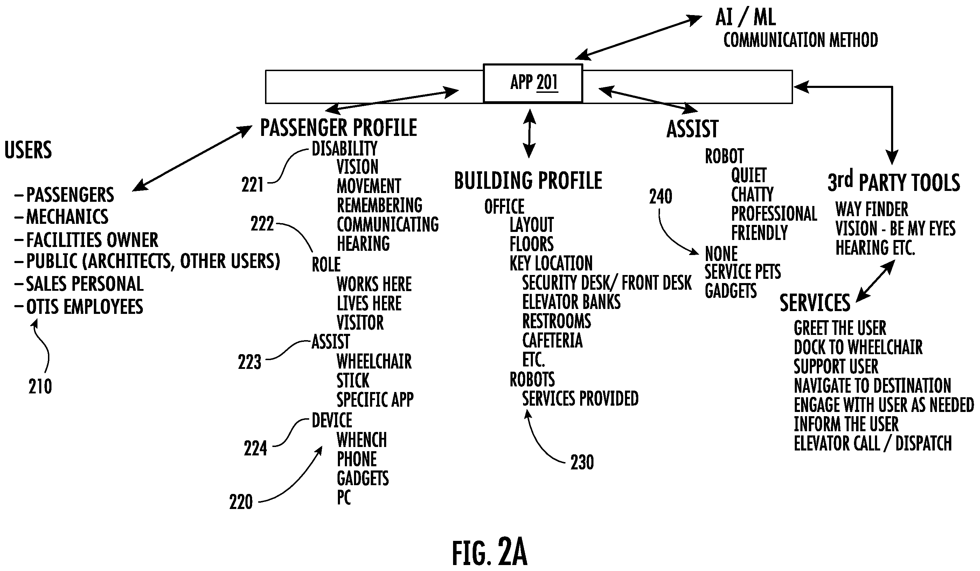

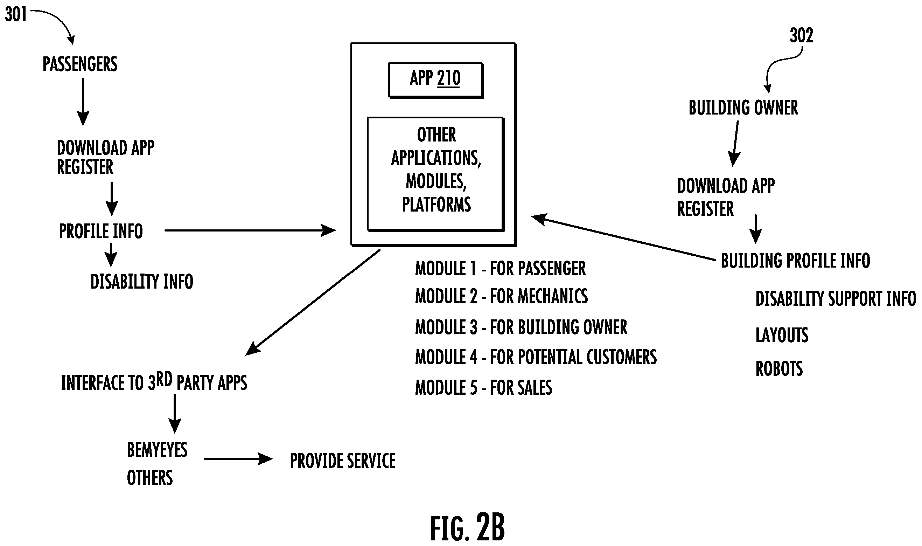

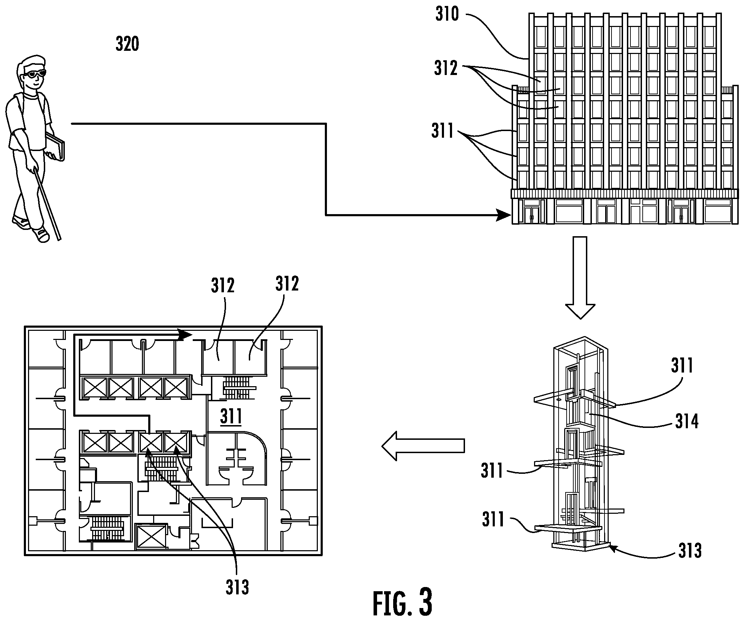

With continued reference to FIG. 1 and with additional reference to FIGS. 2A and 2B and FIG. 3, the elevator system 101 of FIG. 1 can be provided with or generally controlled through an application 201.

As shown in FIG. 2A, the application 201 includes a passenger database 210 that optionally includes information about passengers of different types, such as mechanics, facilities owners, public personnel, sales personnel, employees, building residents and guests, etc., and a passenger profile database 220 that includes optional passenger profiles for each passenger included in the passenger database 210 who has chosen to create a passenger profile. The passenger profiles for each passenger that has chosen to create a passenger profile can include at least one or more of disability information 221 (as well as the preferences and various other characteristics of the passenger), role information 222, assist information 223 and device information 224, all of which can be input by the passenger as the passenger sees fit and all of which can be protected and secured so that no other persons have access. The disability information 221 describes a disability of the corresponding passenger (i.e., any disability such as, but not limited to, vision, movement, memory, communication, hearing, etc.) as well as the preferences and various other characteristics of the passenger, the role information 222 describes a role of the corresponding passenger (i.e., any function such as, but not limited to, works in the building, lives in the building, visits the building, etc.), the assist information 223 describes the corresponding passenger's assist mechanism, such as his/her wheelchair, and the device information 224 describes the corresponding passenger's portable electronic device (i.e., any device or device type such as, but not limited to, a watch, a phone, a gadget, a computer, etc.). The application 201 further includes a building profile database 230 and an assist database 240. The building profile database 230 can include a description of a building in which the elevator system 101 is deployed (i.e., office, layout, rooms, key locations including elevator banks, available robots, etc.). The assist database 240 can include a description of preferred, desired, needed or required assist devices with a variety of preferences (i.e., any assist device such as, but not limited to, a robot which can be chatty, quiet, professional and/or friendly, service pets, gadgets, etc.).

Also as shown in FIG. 2A, the application 201 can interface with a third party tool 250, such as a wayfinding application, a vision assistance application or device and a hearing assistance application or device, and can be provided with artificial intelligence (AI) and/or machine learning (ML) capabilities 260. This third party tool 250 can provide one or more service including greetings, wheelchair docking, support, navigation services, information provision, elevator calling and dispatching, etc.

As shown in FIG. 2B, the application 201 can be provided as a two-sided service for users and for building owners, for example. On the passenger side 301, users download and/or use the application 201 and register, and then they enter their profile information and any disability information that may apply. On the business owner side 302, a representative of a building owner downloads and/or uses the application 201 and registers, and then provides a description of the building including disability support information, layouts, available robots, etc. Separately from the passenger side 301 and the business owner side 302, the third party tool 250 can in certain cases have access to user information and building information so that the third party tool 250 can provide the corresponding service.

With the architecture described above, the application 201 can define an operational module 1 for passengers, an operational module 2 for mechanics, an operational module 3 for building owners, an operational module 4 for potential customers, an operational module 5 for sales personnel, etc.

As shown in FIG. 3, in an exemplary instance, the elevator system 101 of FIG. 1 can be deployed in, for example, an office building 310 (of course, the building need not be an office building) with multiple floors 311 and multiple offices 312 on each floor 311, the office building 310 can be owned by an owner who is a registered user of the application 201 and a passenger 320 can be blind or vision-impaired and can also be a registered user of the application 201. Upon registering, the passenger 320 identifies himself/herself to the application 201 as blind or vision-impaired and needing navigational and wayfinding assistance and the building owner provides layouts of each office 312 on each floor 311 as well as layouts of elevator banks 313 that serve those offices 312 and floors 311 to the application 201. In this exemplary instance, the passenger 320 can input to the application 201 his destination, which in this case, may be an apartment, office or another business location 312 on a particular floor 311 of the office building 310. The passenger 201 is thus guided with voice navigation via his/her smartphone to the office building 310 by the application 201. Once inside the office building 310, the application 201 provides additional voice navigation to the nearest elevator bank 313 whereupon the application 201 can call an elevator 314 via controller 115 of FIG. 1 without the need for the passenger to press a call button and can input to the elevator system 101 of FIG. 1 a destination floor. Once the elevator 314 arrives, the application 201 can direct the passenger into and out of the elevator 314 without the need for the passenger to press a floor button, and can direct the passenger to the destination apartment, office or other business location 312 once the elevator 314 reaches the destination floor 311.

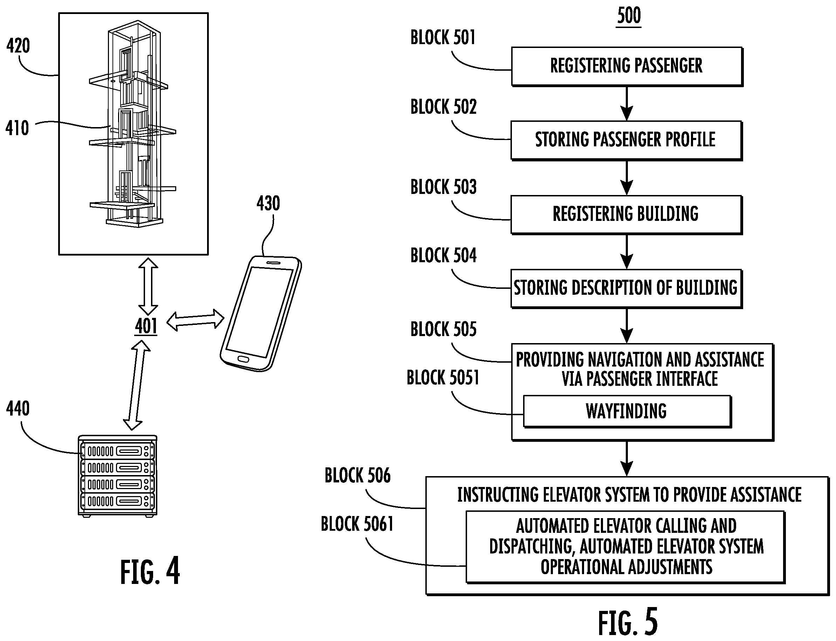

With continued reference to FIGS. 1-3 and with additional reference to FIG. 4, a control system 401 is provided and includes an elevator system 410, such as the elevator system of FIG. 1 or, more particularly, the controller 115, which is deployed in a building 420, a passenger device 430, such as a portable computing device and/or a smartphone, and a building owner device 440, such as a portable computing device, a smartphone and/or a computer system of the building 420. A memory of the passenger device 430 has first executable instructions of an elevator control application (i.e., the application 201 of FIGS. 2A, 2B and 3) stored thereon, which, when executed, cause a processor of the passenger device 430 to register a passenger with the elevator control application, to store a passenger profile of the passenger with the elevator control application and to generate a passenger interface 431 by which the passenger can interface with the elevator control application. A memory of the building owner device 440 has second executable instructions of the elevator control application stored thereon, which, when executed, cause the processor of the building owner device 440 to register the building 420 with the elevator control application and to store a description of the building 420 with the elevator control application. In accordance with embodiments, the passenger profile can include at least disability information, preferences and various other characteristics of the passenger (i.e., user-supplied or passenger-supplied disability information that is input by the user or passenger at their discretion) and the description of the building 420 can include at least available assistance information of the building 420 as well as the building address, the building name, tenant lists and other characteristics of the building 420.

In general, the passenger profile of the passenger includes a description of a type of the passenger as well as, for example, the disability information of the passenger (along with preferences and various other characteristics of the passenger any other personal information the passenger wishes to share about his/her movement preferences, desires and/or needs and requirements) and at least one or more of role information of the passenger, passenger assistance information and passenger device information. Also, in general, the description of the building 420 includes a location of the building 420 as well as descriptions of floors and floor layouts of the building 420, the available assistance information of the building 420 and descriptions of building services.

With continued reference to FIG. 4 and, in an exemplary case (see FIG. 3 and the accompanying text), when executed, the first executable instructions of the elevator control application cause the processor of the passenger device 430 to provide via the passenger interface 431 navigation and assistance to the passenger in travel to and through the building 420 in accordance with the passenger profile, the disability information of the passenger as well as the preferences and various other characteristics of the passenger, the description of the building 420 and the available assistance information of the building 420 where the navigation and assistance can include, for example, at least wayfinding to and through the building 420. Further, when executed, the second executable instructions of the elevator control application cause the processor of the building owner device 440 to instruct the elevator system 410 to provide available assistance to the passenger in travel to and through the building 420 in accordance with the passenger profile, the disability information of the passenger as well as the preferences and various other characteristics of the passenger, the description of the building 420 and the available assistance information of the building 420 where the available assistance can include, for example, at least automated elevator calling and dispatching and automated elevator system operational adjustments.

With reference to FIG. 5, a control system operational method 500 of the control system 401 of FIG. 4 is provided. As shown in FIG. 5, the control system operational method 500 includes registering a passenger with an elevator control application (block 501), storing a passenger profile of the passenger with the elevator control application (block 502), registering the building with the elevator control application (block 503), storing a description of the building with the elevator control application (block 504), providing via a passenger interface navigation and assistance to the passenger in travel to and through the building in accordance with the passenger profile and the description of the building (block 505) and instructing the elevator system (i.e., the controller 115 of FIG. 1) to provide available assistance to the passenger in the travel to and through the building in accordance with the passenger profile and the description of the building (block 506). **In** accordance with embodiments, the providing via the passenger interface of the navigation and assistance of block 505 can include, for example, wayfinding to and through the building (block 5051) and the instructing of the elevator system to provide the available assistance of block 506 can include, for example, instructing the elevator system to execute automated elevator calling and dispatching and automated elevator system operational adjustments (block 5061).

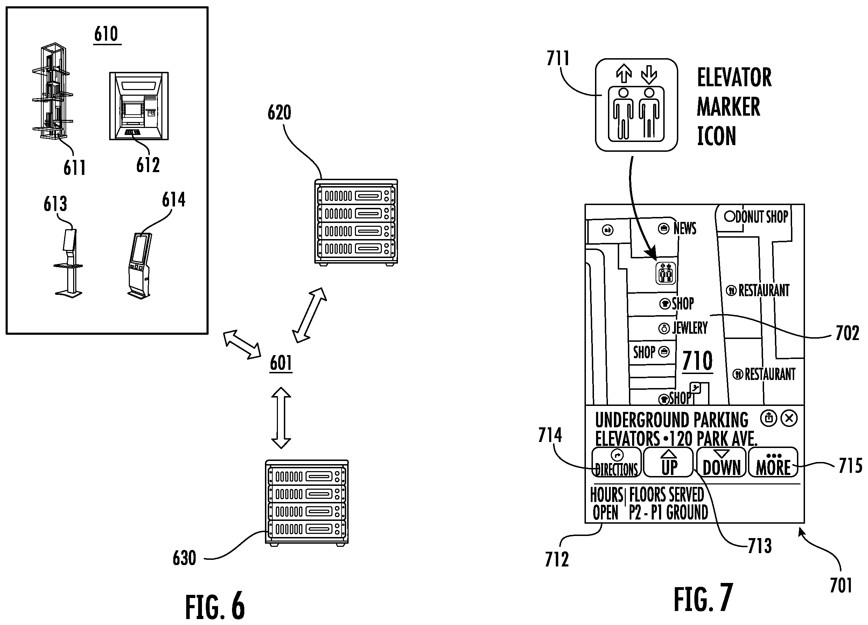

With reference to FIG. 6, a system 601 is provided and includes an electromechanical system 610, a controller 620, such as the controller 115 of FIG. 1, and a multi-modal navigation system 630. **In** accordance with embodiments, the electromechanical system 610 can include any one or more of an elevator system (or an escalator or a moving walkway) 611, a banking kiosk 612, a shopping checkout kiosk 613 and a food ordering kiosk 614 as well as a control door 615 and a turnstile 616. The controller 620 can be, but is not required to be, controllable and operable by a primary operator of the electromechanical system 610. **In** any case, the controller 620 is configured to control operations of the electromechanical system 610 in accordance with passenger commands.

The multi-modal navigation system 630 can, for example, be provided as an end-to-end multi-modal navigation system in which various modes of travel include, but are not limited to, personnel transport systems such as elevators, escalators and moving walkways, walking systems on sidewalks, through corridors and up and down stairs, driving systems on a road network, including provisions for parking garages and parking lots, public transportation systems such as trains, subways and buses, bicycling systems, systems for allowing passage through security doors and turnstiles, etc.

The multi-modal navigation system 630 is communicative with the controller 620. In that condition, the multi-modal navigation system 630 is receptive of information relating to the operations of the electromechanical system 610 and is configured to control at least a first subset of the operations of the electromechanical system 610 in accordance with the information received from the controller 620 and at least a second subset of the passenger commands. In accordance with embodiments, the multi-modal navigation system 630 can be configured to generate a route (or multiple routes from which a user can select from) from an origin location to a destination location where the route can traverse multiple "modes," such as driving a car, riding a train, walking on a sideway, taking an elevator, etc. Also, the multi-modal navigation system 630 consider convenience factors, such as time to traverse a segment of the route by a given mode. It is to be understood that, as used herein, the terms "origin location" and destination location" can refer to geographic locations and to vertical locations, such as floor numbers in a building.

With reference to FIG. 7, in the exemplary case in which the electromechanical system 610 includes or is provided as the elevator system 611, the electromechanical system 610 can be deployed in a building as described above with the primary operator being an owner of the building. In these or other cases, a wayfinding application 701 is a client of the multi-modal navigation system 630 and, within a passenger interface 710, displays navigation information and generates an interface from which at least the first subset of the operations of the electromechanical system 610 are controllable with the information and at least the second subset of the passenger commands.

As shown in FIG. 7, the passenger interface 710 can include a graphical marker 711 (which can be actuatable or clickable as in a virtual or real-world button or which can be any other type of interactive element) that appears on a navigation map 702 of the wayfinding application 701 and is representative of an elevator group and a position thereof. When the graphical marker 711 is actuated or clicked, the passenger interface 710 provides elevator-specific details 712 including one or more of a list of floors served, an estimated time of elevator arrival, a number of elevators, elevator operational statuses, a queue length, elevator cab sizes and car speeds. Also, when the graphical marker 711 is actuated or clicked, the passenger interface 710 is usable to call an elevator and can include at least one or more of a two-button interface 713 and a destination entry interface 714. In addition, when the graphical marker 711 is actuated or clicked and is a waypoint along a navigational pathway of the passenger, the passenger interface 711 can include at least one of a floor selection menu with an automatic elevator call and an automatic notification issuance capability that can be provided as a menu button 715.

In the exemplary case in which the electromechanical system 610 includes or is provided as the at least one of the banking kiosk 611, the shopping checkout kiosk 612 and the food ordering kiosk 613, the electromechanical system 610 can be deployed in a building or spatial area as described above with the primary operator being an owner of the building or the spatial area. In these or other cases, the multi-modal navigation system 630 can again be the publisher of the wayfinding application 701 of FIG. 7 and can generate, within the wayfinding application 701, an interface by which at least the subset of the operations of the electromechanical system 610 are controllable with at least the subset of the passenger commands. That is, a user of the wayfinding application 701 will be able to use the wayfinding application to navigate to and control the banking kiosk 611, for example, using his/her smartphone without the need for removing a bank card or interfacing with the control buttons of the banking kiosk 611 itself.

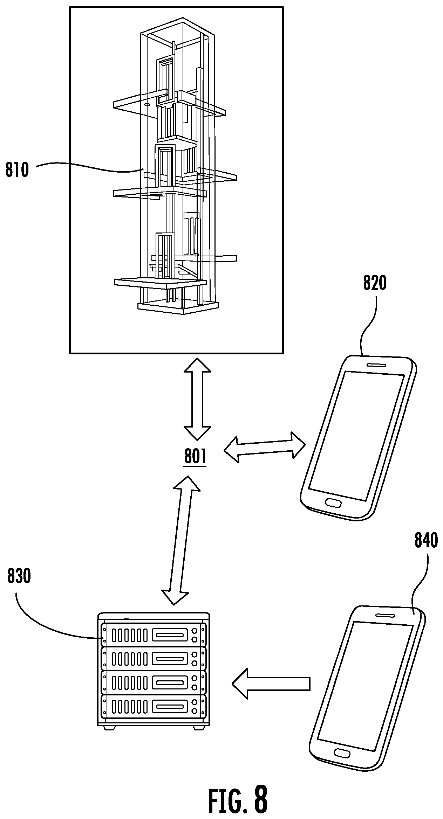

With reference to FIG. 8, a computing system 801 is provided for wayfinding and elevator system control. The computing system includes an elevator system 810 deployed in a building and being controllable by an elevator control application such as the application 201 of FIGS. 2A and 2B, a first device 820 configured to execute a first side of the elevator control application, a second device 830 and a third device 840. The second device 830 is configured to execute a first side of a wayfinding application such as the wayfinding application 701 of FIG. 7 and to generate, for display within the wayfinding application, a passenger interface such as the passenger interface 710 of FIG. 7 by which a passenger is able to interface with a second side of the elevator control application. The third device 840 is configured to execute a second side of the wayfinding application with the passenger interface displayed therein whereby the passenger interfaces with the second side of the elevator control application.

As above, the passenger interface can include a graphical marker (which can be actuatable or clickable as in a virtual or real-world button or which can be any other type of interactive element) that appears on a navigation map of the wayfinding application and is representative of an elevator group and a position thereof. When the graphical marker is actuated or clicked, the passenger interface provides elevator-specific details including one or more of a list of floors served, an estimated time of elevator arrival, a number of elevators, elevator operational statuses, a queue length, elevator cab sizes, car speeds and additional elevator car characteristics (i.e., operating status, cab size and car speed, whether an elevator car is a glass elevator or not, a style or motif of an elevator car, etc.). Also, when the graphical marker is actuated or clicked, the passenger interface is usable to call an elevator and can include at least one or more of a two-button interface and a destination entry interface. In addition, when the graphical marker is actuated or clicked and is a waypoint along a navigational pathway of the passenger, the passenger interface can include at least one of a floor selection menu with an automatic elevator call and an automatic notification issuance capability (see FIG. 7).

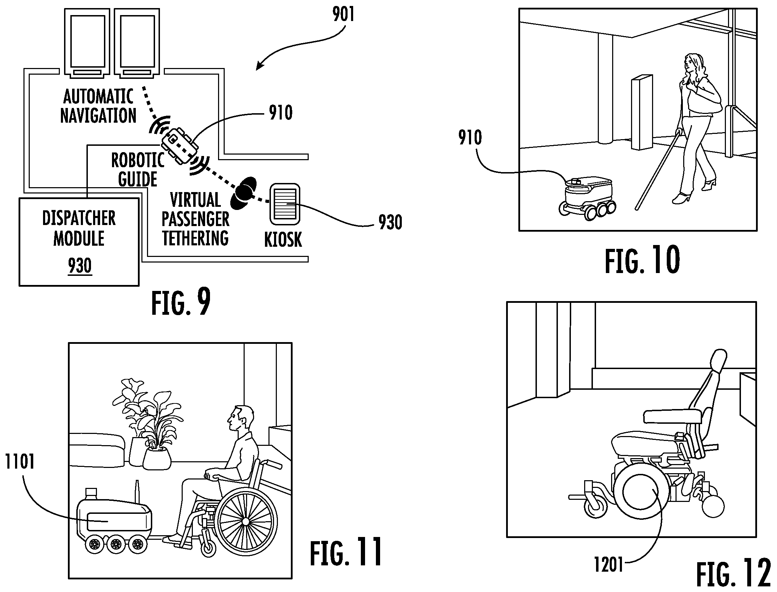

With reference to FIGS. 9 and 10, an automatic wayfinding system 901 is provided and includes a robotic guide 910 (which can be one of a plurality of robotic guides 910, each having a unique configuration), a passenger interface 920 through which a passenger provides an input of a desired destination and a dispatching module 930. Upon receipt of the input of the desired destination, the dispatching module 930 dispatches the robotic guide 910 to the passenger. In addition to providing the input of the destination, the passenger can also generate a passenger profile through the passenger interface 920, where the passenger profile can include a description of a disability of the passenger as well as the preferences and various other characteristics of the passenger. At least one of the robotic guide 910 and the dispatching module 930 have access to a navigation map including the desired destination, a current position of the passenger and information relating to one or more paths from the current position of the passenger to the desired destination. The robotic guide 910 can be provided with a unique configuration that corresponds to the disability of the passenger as well as the preferences and various other characteristics of the passenger and is programmed to lead the passenger along the one or more paths while remaining tethered to the passenger, in which case the dispatching module 930 selects the robotic guide 910 whose configuration corresponds to the disability as well as the preferences and various other characteristics of the passenger (i.e., the robotic guide 910 of FIG. 9 is selected for correspondence with blindness and the robotic guides of FIGS. 11 and 12 are selected for correspondence with passengers needing mobility assistance).

In accordance with embodiments, the automatic wayfinding system 901 can be deployed in a building including an elevator system as described above and, in these or other cases, the navigation map can include information of the elevator system and the one or more paths can include elevator entrances and exits and vertical movements along elevator shafts. In any case, the robotic guide 910 can be communicative with elevators of the elevator system (i.e., to place an elevator call on behalf of the passenger) and can be communicative with the passenger and provided with storage components 911 for luggage and other baggage.

As shown in FIGS. 9 and 10, the robotic guide 910 can be virtually tethered to the passenger and can use detection technology, such as LiDAR, to detect a position of the passenger while leading the passenger along the one or more paths and can be programmed to remain close to the passenger by matching the passenger's pace. This can be particularly helpful in a case in which the passenger's disability is blindness, for example, as illustrated in FIG. 10 with the robotic guide 910 being capable of leading the passenger in close proximity to the passenger but without there being a need for the robotic guide 910 to actually be physically tethered to the passenger.

With reference to FIGS. 11 and 12, the robotic guide 910 can be physically tethered to the passenger by coupling with a wheelchair 1101 of the passenger or by being itself a standalone wheelchair 1201 for the passenger.

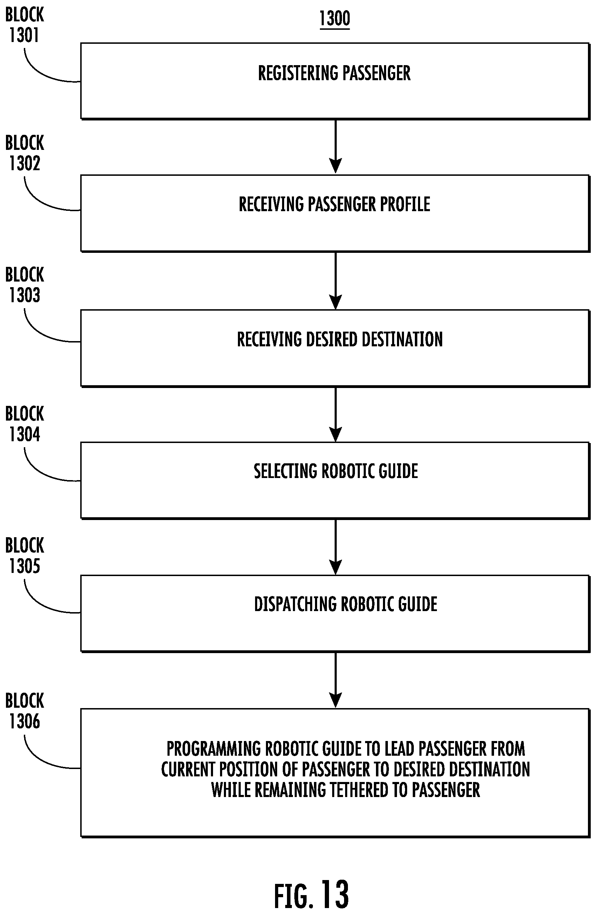

With reference to FIG. 13, an operational method 1300 of an automatic wayfinding system such as the automatic wayfinding system 901 of FIG. 1 is provided and can be deployed in a building including an elevator system as described above. The operational method 1300 includes registering a passenger (block 1301), receiving, from the passenger, a passenger profile (block 1302) and receiving, from the passenger, an input of a desired destination (block 1303). The operational method 1300 further includes selecting, from among a plurality of robotic guides, a robotic guide having a unique configuration corresponding to the passenger profile (block 1304), dispatching the robotic guide to the passenger (block 1305) and programming the robotic guide to lead the passenger from a current position of the passenger to the desired destination while remaining tethered to the passenger (block 1306).

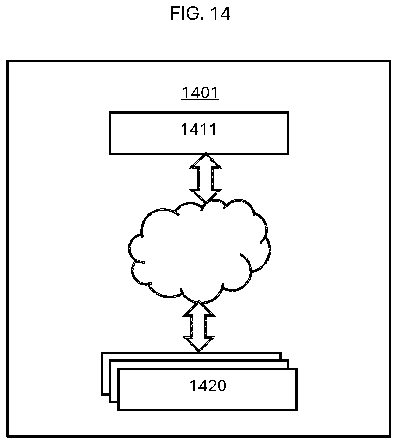

With reference to FIG. 14, an integrated system 1401 is provided and is executable on a portable computing device 1410. The integrated system includes a passenger interface 1411 and a plurality of applications 1420 networked together for data sharing. The plurality of applications 1420 can include at least a multi-modal navigation system, of which a wayfinding application is a client, and a movement system application for controlling a personnel movement system, such as the elevator system described above. The passenger interface 1411 is configured to present at least the wayfinding application and the movement system application to a passenger via the portable computing device 1410 such that the wayfinding application and the movement application are interactive with the passenger for navigation and for controlling the personnel movement system with sensory feedback transmittable (from the sensors in the portable computing device 1410) to the passenger in association with passenger interactions with the wayfinding application and the movement application. In accordance with embodiments, the sensory feedback can include at least one of audio feedback, visual feedback and haptic feedback. In accordance with further embodiments, the wayfinding application can be configured for a passenger with a disability or with some set of preferred assistance modalities. In any case, the passenger interface 1411 can present a graphical marker (see FIG. 7), which is representative of one or more of elevator groups, escalators and moving walkways and respective positions thereof of the personnel movement system, in a navigation map of the wayfinding application. As noted above, when the graphical marker is actuated or clicked, the passenger interface provides elevator-specific details comprising one or more of a list of floors served, an estimated time of elevator arrival, a number of elevators, elevator operational statuses, a queue length, elevator cab sizes, car speeds and additional elevator car characteristics. In addition, as noted above, when the graphical marker is actuated or clicked, the passenger interface is usable to call an elevator.

Technical effects and benefits of the present disclosure are the provision of an elevator system application to enable and assist people, especially people with disabilities to interface with elevators for access, use, service and maintenance. This also enables buildings to generate additional revenue by providing service to customers through lease of assist or service as well as in advertisements in robots and communications. This also improves accessibility for people with disabilities across all user bases and life cycles. In addition, an elevator system is provided that makes use of navigation applications for wayfinding and provides a way for users to interface with the elevator system and elevators thereof without installed an elevator system application. Also, robotic assist devices of an elevator system effectively provide for an automated concierge and porter service for passengers, such as physically challenged passengers, to assist them with wayfinding in buildings thus reducing their stress with an interactive technology to facilitate their requests and navigation.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. An automatic wayfinding system, comprising:
a robotic guide;
a passenger interface through which a passenger provides an input of a desired destination; and
a dispatching module, which, upon receipt of the input of the desired destination, dispatches the robotic guide to the passenger,
at least one of the robotic guide and the dispatching module having access to a navigation map comprising the desired destination, a current position of the passenger and information relating to one or more paths from the current position of the passenger to the desired destination, and
the robotic guide being programmed to lead the passenger along the one or more paths while remaining tethered to the passenger.

2. The automatic wayfinding system according to claim 1, wherein the automatic wayfinding system is deployed in a building comprising a personnel movement system, the navigation map comprises information of the personnel movement system and the one or more paths comprise elevator/escalator/moving walkway entrances and exits and vertical movements along elevator shafts.

3. The automatic wayfinding system according to claim 2, wherein the robotic guide is communicative with elevators, escalators and moving walkways of the personnel movement system.

4. The automatic wayfinding system according to claim 1, wherein the robotic guide is communicative with the passenger and comprises storage components.

5. The automatic wayfinding system according to claim 1, wherein the passenger registers for the automatic wayfinding system through the passenger interface and generates a passenger profile, preferably wherein the passenger profile is descriptive of at least a disability of the passenger and the robotic guide is configured in accordance with at least the disability.

6. The automatic wayfinding system according to claim 1, wherein:
the robotic guide is virtually tethered to the passenger, and
the robotic guide uses detection technology to detect a position of the passenger while leading the passenger along the one or more paths and is programmed to remain close to the passenger.

7. The automatic wayfinding system according to claim 1, wherein the robotic guide is physically tethered to the passenger by coupling with a wheelchair of the passenger, or wherein the robotic guide is physically tethered to the passenger and is a standalone wheelchair for the passenger.

8. An automatic wayfinding system, comprising:
a plurality of robotic guides, each having a unique configuration;
a passenger interface through which a passenger registers for the automatic wayfinding system, generates a passenger profile and provides an input of a desired destination; and
a dispatching module, which, upon receipt of the input of the desired destination, selects a robotic guide having the unique configuration corresponding to the passenger profile from the plurality of the robotic guides and dispatches the robotic guide to the passenger,
at least one of the robotic guide and the dispatching module having access to a navigation map comprising the desired destination, a current position of the passenger and information relating to one or more paths from the current position of the passenger to the desired destination, and
the robotic guide being programmed to lead the passenger along the one or more paths while remaining tethered to the passenger.

9. The automatic wayfinding system according to claim 8, wherein the automatic wayfinding system is deployed in a building comprising a personnel movement system, the navigation map comprises information of the personnel movement system and the one or more paths comprise elevator/escalator/moving walkway entrances and exits and vertical movements along elevator shafts, preferably wherein the robotic guide is communicative with elevators, escalators and moving walkways of the personnel movement system.

10. The automatic wayfinding system according to claim 8, wherein the robotic guide is communicative with the passenger and comprises storage components.

11. The automatic wayfinding system according to claim 8, wherein the passenger profile is descriptive of at least a disability of the passenger and the robotic guide is configured in accordance with at least the disability.

12. The automatic wayfinding system according to claim 8, wherein:
the robotic guide is virtually tethered to the passenger, and
the robotic guide uses detection technology to detect a position of the passenger while leading the passenger along the one or more paths and is programmed to remain close to the passenger.

13. The automatic wayfinding system according to claim 8, wherein the robotic guide is physically tethered to the passenger by coupling with a wheelchair of the passenger, or wherein the robotic guide is physically tethered to the passenger and is a standalone wheelchair for the passenger.

14. An operational method of an automatic wayfinding system, the operational method comprising:
registering a passenger;
receiving, from the passenger, a passenger profile;
receiving, from the passenger, an input of a desired destination;
selecting, from among a plurality of robotic guides, a robotic guide having a unique configuration corresponding to the passenger profile;
dispatching the robotic guide to the passenger; and
programming the robotic guide to lead the passenger from a current position of the passenger to the desired destination while remaining tethered to the passenger.

15. The operational method according to claim 14, wherein:
the automatic wayfinding system is deployed in a building comprising a personnel movement system, and
the programming comprises programming the robotic guide to lead the passenger in entrances and exits with respect to elevators/escalators/moving walkways of the personnel movement system and vertical movements along elevator shafts;
or wherein the passenger profile is descriptive of at least a disability of the passenger and the unique configuration of the robotic guide corresponds to at least the disability.
